# EUROPEAN PATENT APPLICATION

(11) **EP 1 246 293 A2**
(43) Date of publication of application: **02.10.2002**
(21) Application number: 02251959.9
(22) Date of filing: 19.03.2002
(51) Int. Cl.: H01Q 1/10, H04N 1/00, H04N 7/14

(54) **Mobile radio terminal**

(30) Priority: 28.03.2001 JP 2001093658
(71) Applicant: Kabushiki Kaisha Toshiba, Tokyo (JP)
(72) Inventor: Iiimura, Kaiji, c/o I.P.D. Toshiba K.K., Tokyo 105-8001 (JP); Ito, Koichi, c/o I.P.D. Toshiba K.K., Tokyo 105-8001 (JP)
(74) Representative: Shindler, Nigel

(57) **Abstract**

An antenna state detection section (102) determines whether an antenna (101) is in a pulled out state or in a retracted state. A zoom varying mechanism (112) varies the angle of view of a camera (111) according to an instruction from a control section (100). A direction-of-imaging detection section (113) detects the direction of the camera (111). The control section (100) sets the initial angle of view and the variable frame of the angle of view of the camera (111) on the basis of the direction of imaging detected by the direction-of-imaging detection section (113), the state of the antenna (101) detected by the antenna state detection section (102), and an angle-of-view data table stored in a memory (107).

## Description

The present invention relates to a mobile radio terminal such as a cellular phone terminal, which has an electronic camera capable of varying a direction.

There are known conventional terminal devices, such as a PHS (Personal Handyphone System) and a PDC (Personal Digital Cellular) system, which have electronic cameras and have functions to send acquired images to the other end.

In modern mobile communication systems, it is expected that image data transmission will be performed more frequently, with the adoption of a high-speed radio communication method such as a W-CDMA (Wideband Code Division Multiple Access).

A mobile radio terminal with an electronic camera comprises a mechanism for controlling a direction, for example, by rotating an electronic camera, and a mechanism for varying an angle of view for imaging by optical processing or image processing.

For example, when the mobile radio terminal with these mechanisms is used as a TV phone, the electronic camera is directed to the user to take an image of the user. On the other hand, when used to take a snapshot, the electronic camera is directed to an object opposite to the user, and the user confirms an acquired image on a display. Therefore, it is complicated for the user to vary the angle of the electronic camera according to the direction of objects.

Further, a part of the mobile radio terminal may enter the frame of image depend on the angle of the electronic camera.

No part of the mobile radio terminal will enter the frame of imaging, when the direction of imaging of the electronic camera is directed forward, or when the direction of imaging of the electronic camera is directed upward in the state in which the antenna is retracted in the terminal case. However, when the direction of imaging of the electronic camera is directed upward in the stated in which the antenna is pulled out, the antenna may possibly enter the frame of imaging.

In the conventional mobile radio terminal, when the direction of imaging of the electronic camera is switched for taking an image, there is a problem that an image may be taken at an undesirable angle of field, or part of the terminal case may enter the frame of imaging, depending on the direction of imaging.

The present invention has been made in consideration of the above problem, and the object of the invention is to provide a mobile radio terminal capable of preventing a part of the terminal from entering the frame of imaging, and permitting imaging at a selected angle of view in a desired direction of imaging even if the direction of imaging of an electronic camera is switched.

In order to achieve the object, the present invention may provide a mobile radio terminal with electronic camera capable of varying a direction, comprising: direction detection section configured to detect the direction of the electronic camera; antenna state detection section configured to detect the extension/retraction state of an antenna; and angle control section configured to vary the angle of the image section in accordance with the direction detected by the direction detection section and the state of the antenna detected by the antenna state detection section.

In the mobile radio terminal with the above structure, the angle of view of the imaging means is varied in accordance with the direction of imaging of the imaging means and the state of the antenna.

Even in the case of a mobile radio terminal with such a structure that a part of the antenna may be imaged when the initial angle of view is wide, the initial angle of view can be narrowed. It is thus possible to prevent a part of the terminal case from entering the frame of imaging and to permit imaging at a selected angle of view in a desired direction of imaging even if the direction of imaging of an electronic camera is switched.

This invention may also provide a mobile radio terminal with electronic camera capable of varying a direction of imaging and an angle of view for imaging, comprising: direction detection section configured to detect the direction of imaging of the electronic camera; variable frame control section configured to set a variable frame of the angle of view of the electronic camera in accordance with the direction of imaging detected by the direction detection section; and angle control section configured to vary the angle of view of the electronic camera within the variable frame set by the variable frame control section.

In the mobile radio terminal with the above structure, the variable frame of the angle of view of the imaging means is set in accordance with the imaging direction of the imaging means, and the angle of view of the imaging means is varied within the set variable frame.

Even in the case of a mobile radio terminal with such a structure that a part of the antenna may be imaged when the initial angle of view is wide, the variable frame of the angle of view can be set in accordance with the extension/retraction state of the antenna and the direction of imaging. Thus, even if the imaging direction of the imaging means is varied, it is possible to perform imaging in the switched direction within the desirable frame of the angle of view, and to prevent a part of the terminal case from entering the frame of imaging.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a circuit block diagram showing the structure of a mobile radio terminal according to an embodiment of the present invention;
FIG. 2 is a view for describing the structure and operation of an antenna state detection section of the mobile radio terminal shown in FIG. 1;
FIG. 3 is a view for describing the structure and operation of the antenna state detection section of the mobile radio terminal shown in FIG. 1;
FIG. 4 shows an example of an angle-of-view data table stored in a memory in the mobile radio terminal shown in FIG. 1;
FIG. 5 is a view for describing the structure and operation of a direction-of-imaging detection section of the mobile radio terminal shown in FIG. 1;
FIG. 6 is a view for describing the structure and operation of the direction-of-imaging detection section of the mobile radio terminal shown in FIG. 1;
FIG. 7 is a view for describing the structure and operation of the direction-of-imaging detection section of the mobile radio terminal shown in FIG. 1;
FIG. 8 is a flow chart illustrating a process in an imaging mode of the mobile radio terminal shown in FIG. 1;
FIG. 9 shows an example of an image suitable for imaging at an initial angle of view;
FIG. 10 shows an example of an image suitable for imaging at an initial angle of view;
FIG. 11 shows an example of an image suitable for imaging at an initial angle of view;
FIG. 12 shows an example of an image suitable for imaging at an initial angle of view;
FIG. 13 is a flow chart illustrating a setting operation for an initial angle of view in the mobile radio terminal shown in FIG. 1;
FIG. 14 shows an example of a display image displayed on a display section in the setting operation illustrated in FIG. 13;
FIG. 15 shows an example of a display image displayed on the display section in the setting operation illustrated in FIG. 13;
FIG. 16 shows an example of a display image displayed on the display section in the setting operation illustrated in FIG. 13;
FIG. 17 shows an example of a display image displayed on the display section in the setting operation illustrated in FIG. 13;
FIG. 18 shows a state in which an antenna is included in the frame of imaging when the angle of view is widened; and
FIG. 19 shows a state in which an antenna is excluded from the frame of imaging by narrowing the angle of view.

An embodiment of the present invention will now be described with reference to the accompanying drawings.

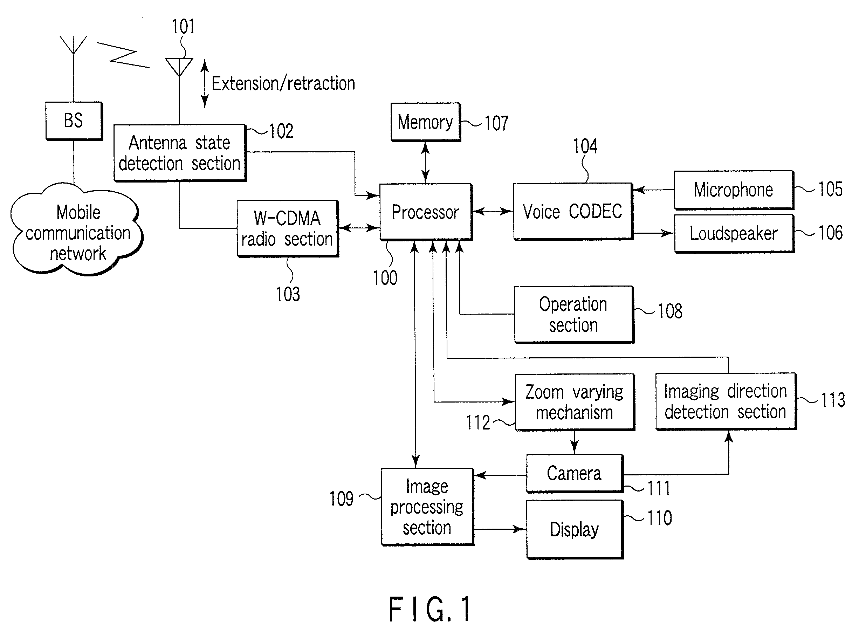

FIG. 1 shows the structure of a mobile radio terminal according to an embodiment of the present invention. The mobile radio terminal is connected by radio to a base station BS of a mobile communication system, and is connected to another communication station via a mobile communication network.

In the description below, assume that a W-CDMA method is used for communication with the base station BS.

In the W-CDMA communication system, 5 MHz bandwidth is used in a 2 GHz band to provide high-speed and large-capacity multimedia mobile communication. A mobile radio terminal can communicate with a base station BS to establish synchronization.

The antenna 101 is an extensible antenna, and it is retracted in the terminal case in a retracted state.

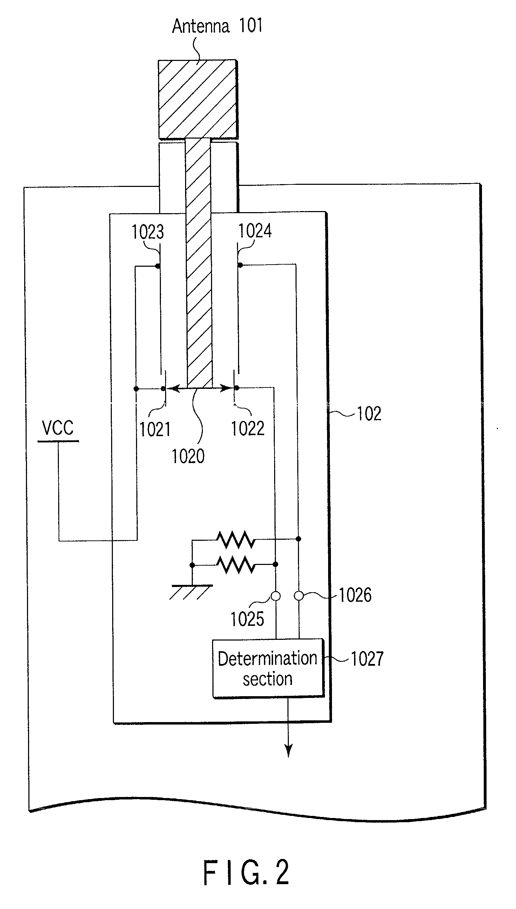

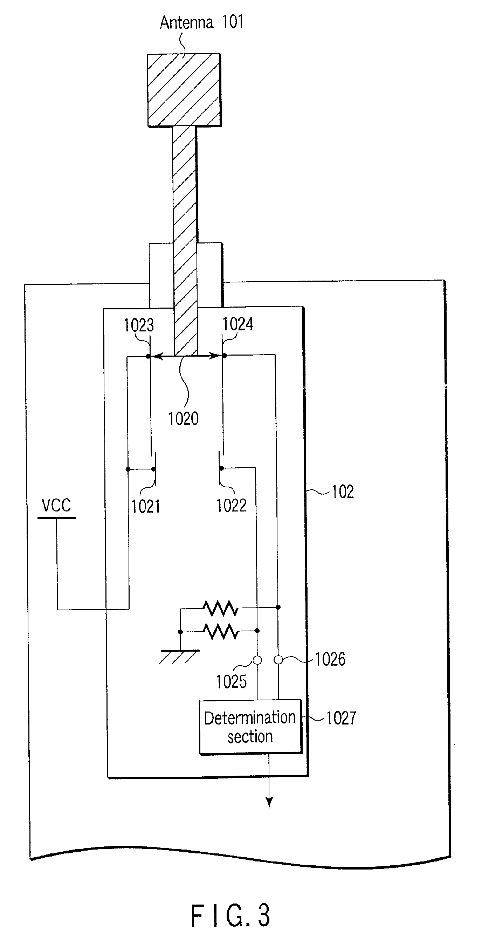

An antenna state detection section 102 determines whether the antenna 101 is in a pulled out state or in a retracted state, and provides a determination result to a processor 100. FIGS. 2 and 3 show an example of the structure of the antenna state detection section 102.

FIG. 2 shows the state in which the antenna 101 is retracted in the terminal case. In this state, contacts 1021 and 1022 are electrically connected by a conductor 1020 provided at a lower part of the antenna 101. Thus, a power supply voltage Vcc is output from a terminal 1025.

FIG. 3 shows the state in which the antenna 101 is pulled out from the terminal case. In this state, contacts 1023 and 1024 are electrically connected by the conductor 1020 provided at the lower part of the antenna 101. Thus, a power supply voltage Vcc is output from a terminal 1026.

When the voltage level of the terminal 1025 or 1026 has become the power supply voltage Vcc, a determination section 1027 determines the pulled out state of the antenna 101 or the retracted state of the antenna 101. In the description below, assume that the determination section 1027 determines the state of the antenna 101 at every 0.05 second.

A W-CDMA radio section 103 performs transmission/reception of CDMA signals with the base station BS via the antenna 101. The W-CDMA radio section 103 transmits encoded data which is input from a voice CODEC 104 via the processor 100. The W-CDMA radio section 103 receives encoded data and provides it to the voice CODEC 104 via the processor 100. The chip rate of spread codes is set at 4.096 Mcps, and a QPSK (Quaternary Phase Shift Keying) method is used as a primary modulation method.

The voice CODEC 104 encodes a transmission call voice signal input from a microphone 105 according to a predetermined voice encoding method, and provides the encoded signal to the W-CDMA radio section 103 via the processor 100. The voice CODEC 104 decodes encoded data input from the W-CDMA radio section 103 via the processor 100, converts the decoded data to a reception call signal, and outputs it through a loudspeaker 106 with an amplified magnitude.

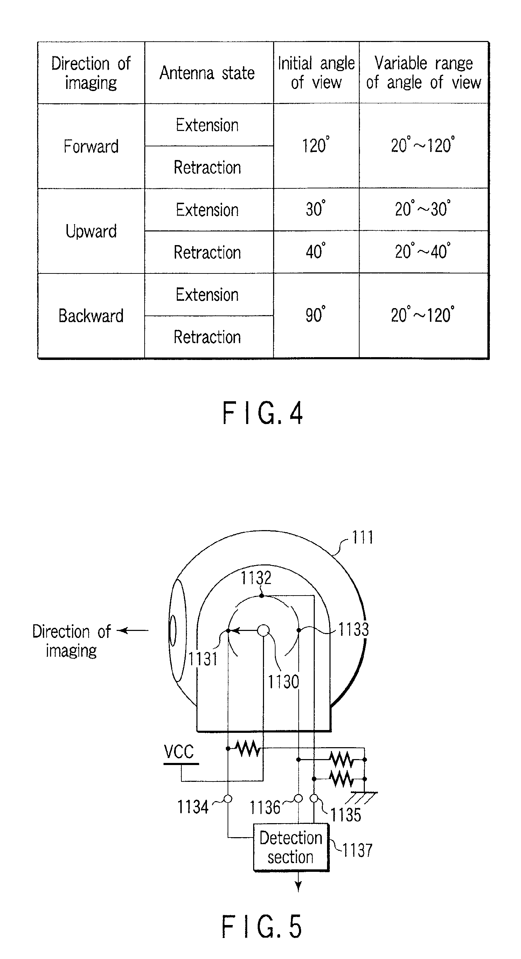

A memory 107 comprises a semiconductor memory such as a RAM or a ROM, and stores control programs for the processor 100, as will be described later. In addition, the memory 107 stores image data acquired by a camera 111, an angle-of-view data table relating to a control of the angle of view for the camera 111, as shown in FIG. 4, and menu image data to be displayed on a display 110.

An operation section 108 is a key input section comprising numeral keys, 4-direction keys, and function keys. The operation section 108 accepts instructions by the user in connection with ordinary call transmission/reception, scrolling of information displayed on the display 110, and imaging by the camera 111.

An image processing section 109 subjects an image signal acquired by the camera 111 to image processing such as encoding, thereby converting the image signal to a format matching with TV phone communication, image data communication, etc.. The image processing section 109 provides the resultant signal to the processor 100.

In addition, the image processing section 109 decodes received image data and image data stored in the memory 107, and displays the decoded data on the display 110. Moreover, the image processing section 109 has a digital zoom function of subjecting the image signal acquired by the camera 111 to image processing and enlarging/reducing the acquired image.

The image processing section 109 has a function of determining a value of the angle of view of the camera 111, which corresponds to an image obtained by the image processing. The image processing section 109 tells the determined value of the angle of view to the processor 100.

The display 110 comprises an LCD (Liquid Crystal Display) or OEL (Organic Electro Luminescence).

The camera 111 is an electronic camera using a CCD (Charge Coupled Device) or a CMOS solid-state imaging device. The camera 111 has a zoom mechanism of optically varying an angle of view for imaging, and a mechanism of varying a direction of imaging. An image signal acquired by the camera 111 is output to the image processing section 109.

A zoom varying mechanism 112 varies the angle of view of the camera 111 according to an instruction from the processor 100. The zoom varying mechanism 112 has a mechanism of detecting the optical angle of view, and tells the detected angle of view to the processor 100.

A direction-of-imaging detection section 113 detects the direction of the camera 111, and tells the detected direction of imaging to the processor 100. FIGS. 5, 6 and 7 show examples of the structure of the direction-of-imaging detection section 113.

In FIG. 5, the camera 111 is directed forward (the left-hand in the Figure; on the operation section 108 side). In this case, a switch 1130 is electrically connected to a contact 1131, and a power supply voltage Vcc is output from a terminal 1134.

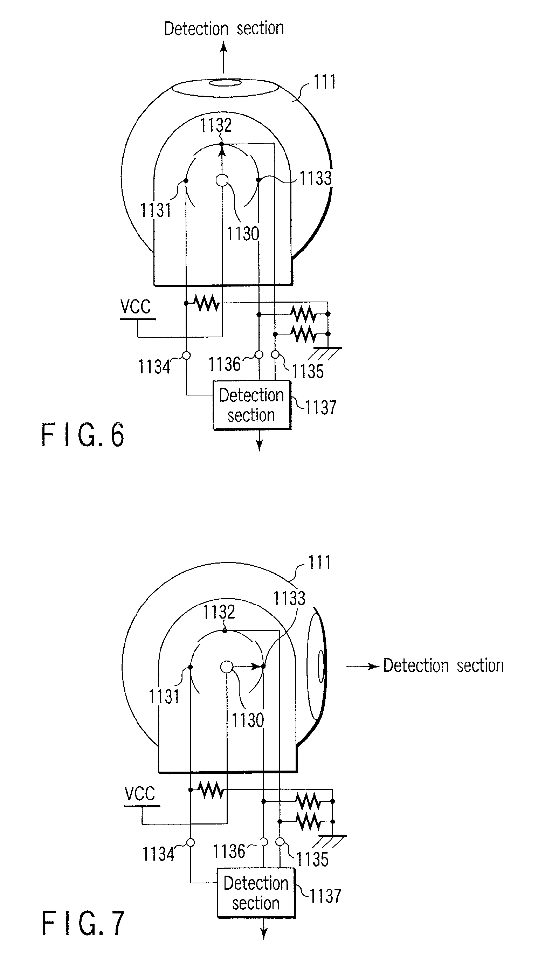

In FIG. 6, the camera 111 is directed upward (the above in the Figure). In this case, the switch 1130 is electrically connected to a contact 1132, and a power supply voltage Vcc is output from a terminal 1135.

In FIG. 7, the camera 111 is directed backward (the right-hand in the Figure; on the back side of the terminal case). In this case, the switch 1130 is electrically connected to a contact 1133, and a power supply voltage Vcc is output from a terminal 1136.

When the voltage level of the terminal 1134, 1135 or 1136 has become the power supply voltage Vcc, a determination section 1137 determines the direction of the camera 111.

In the description below, assume that the determination section 1137 determines the direction of the camera 111 in every 0.05 second.

The processor 100 controls the respective sections within the mobile radio terminal. The processor 100 controls the radio communication via the mobile communication network, the angle of view of camera 111, display and storage of image data, updating of the data table shown in FIG. 4, etc.

The operation of the mobile radio terminal with the above structure will now be described.

An operation for mobile communication is an ordinary one, and a description thereof is omitted. The operation relating to the angle-of-view control of camera 111 according to the invention will be described. In particular, the operation of taking a still image will be described.

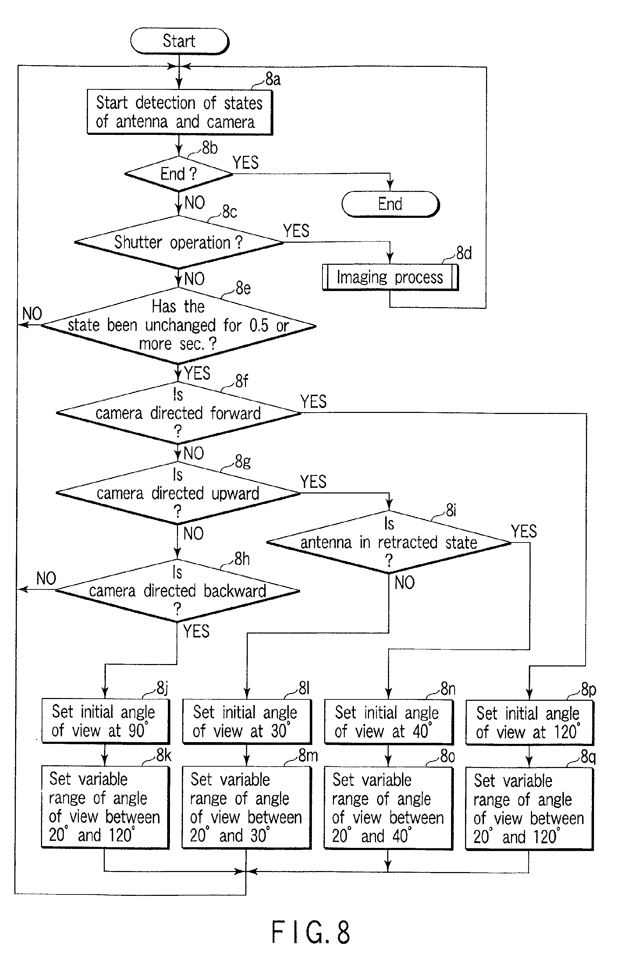

FIG. 8 is a flow chart illustrating a process in an imaging mode of the camera 111. This process is controlled by the processor 100. The user operates the operation section 108 to request execution of the imaging mode. Then, the present process begins.

In step 8a, the monitor of the state of antenna 101 is started on the basis of a determination result of the determination section 1027 of the antenna state detection section 102, and the monitor of the direction of the camera 111 is started on the basis of a determination result of the determination section 1137 of the direction-of-imaging detection section 113.

The image processing section 109 is activated to start the image processing for the image signal acquired by the camera 111, and the display 110 is caused to display the image acquired by the camera 111. The control goes to step 8b.

In step 8b, it is determined whether the imaging mode needs to be finished or not. For example, the user operates the operation section 108 to request finish of the imaging mode, or to receive a call signal from the base station BS.

If the imaging mode needs to be finished, the imaging mode is finished. If not, the control goes to step 8c.

In step 8c, it is determined whether the user has operated the operation section 108 to effect a shutter operation to instruct imaging.

If the shutter operation is effected, the control goes to step 8d. If not, the control goes to step 8e.

In step 8d, the image processing section 109 is activated to convert the image signal acquired by the camera 111 to image data of a predetermined format. The image processing section 109 takes in the image data, and stores it in the memory 107. The control then goes to step 8a.

In step 8e, it is determined whether the state of antenna 101 or the direction of the camera 111 has been unchanged for 0.5 second or more, on the basis of the determination results of the antenna state detection section 102 and direction-of-imaging detection section 113.

If the state of antenna 101 or the direction of the camera 111 has changed during a time period of less than 0.5 second, the control goes to step 8a. On the other hand, if the state of antenna 101 or the direction of the camera 111 has been unchanged for 0.5 second or more, the control goes to step 8f.

In step 8f, it is determined whether the direction of the camera 111 is a forward direction, on the basis of the determination result of the direction-of-imaging detection section 113.

If the direction of the camera 111 is a forward direction, the control goes to step 8p. If not, the control goes to step 8g.

In step 8g, it is determined whether the direction of the camera 111 is an upward direction, on the basis of the determination result of the direction-of-imaging detection section 113.

If the direction of the camera 111 is an upward direction, the control goes to step 8i. If not, the control goes to step 8h.

In step 8h, it is determined whether the direction of the camera 111 is a backward direction, on the basis of the determination result of the direction-of-imaging detection section 113.

If the direction of the camera 111 is a backward direction, the control goes to step 8j. If not, the control goes to step 8a.

In step 8j, the angle-of-view data table shown in FIG. 4 is referred to, and at least one of the image processing section 109 and zoom varying mechanism 112 is controlled to set the initial angle of view of camera 111 at 90°. The control then goes to step 8k.

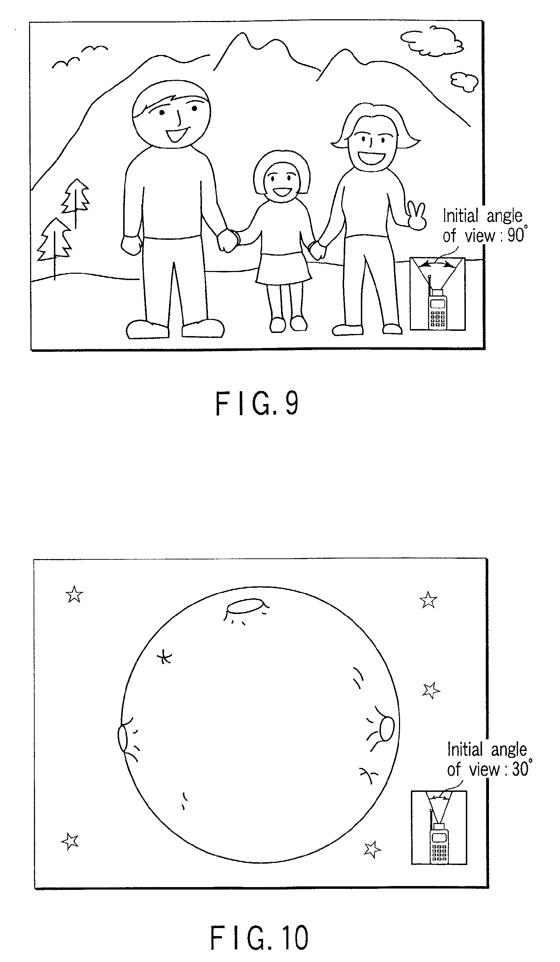

In this case, the initial angle of view of camera 111 is set at 90° by way of example. The angle of view set in this case is a suitable one for imaging of an ordinary camera, as shown in FIG. 9.

In step 8k, the angle-of-view data table shown in FIG. 4 is referred to, and at least one of the image processing section 109 and zoom varying mechanism 112 is controlled to set the variable frame of the angle of view of camera 111 in a frame between 20° and 120°. The control then goes to step 8a.

Although a detailed explanation is omitted, the angle of view of camera 111 is variable in this variable frame according to the user's request through the operation section 108 in subsequent operations.

In step 8i, it is determined whether the antenna 101 is in the retracted state or not, on the basis of a determination result of the antenna state detection section 102.

If the antenna 101 is in the retracted state, the control goes to step 8n. If the antenna 101 is not in the retracted state, that is, if the antenna 101 is in the pulled out state, the control goes to step 81.

In step 81, the angle-of-view data table shown in FIG. 4 is referred to, and at least one of the image processing section 109 and zoom varying mechanism 112 is controlled to set the initial angle of view of camera 111 at 30°. The control then goes to step 8m.

In this case, the initial angle of view of camera 111 is set at 30° by way of example. The angle of view set in this case is a suitable one for supertelephotographic imaging as shown in FIG. 10. The setting of this narrow angle of view intends to prevent part of the mobile radio terminal from entering the frame of imaging.

In step 8m, the angle-of-view data table shown in FIG. 4 is referred to, and at least one of the image processing section 109 and zoom varying mechanism 112 is controlled to set the variable frame of the angle of view of camera 111 in a frame between 20° and 30°. The control then goes to step 8a.

Although a detailed explanation is omitted, the angle of view of camera 111 is variable in this variable frame according to the user's request through the operation section 108 in subsequent operations.

In step 8n, the angle-of-view data table shown in FIG. 4 is referred to, and at least one of the image processing section 109 and zoom varying mechanism 112 is controlled to set the initial angle of view of camera 111 at 40°. The control then goes to step 8o.

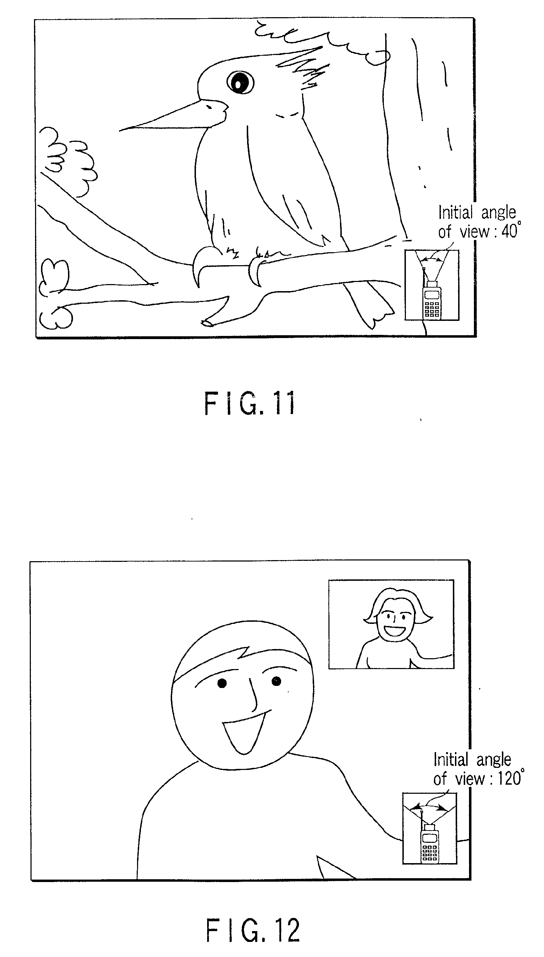

In this case, the initial angle of view of camera 111 is set at 40° by way of example. The angle of view set in this case is a suitable one for telephotographic imaging as shown in FIG. 11.

In step 8o, the angle-of-view data table shown in FIG. 4 is referred to, and at least one of the image processing section 109 and zoom varying mechanism 112 is controlled to set the variable frame of the angle of view of camera 111 in a frame between 20° and 40°. The control then goes to step 8a.

Although a detailed explanation is omitted, the angle of view of camera 111 is variable in this variable frame according to the user's request through the operation section 108 in subsequent operations.

In step 8p, the angle-of-view data table shown in FIG. 4 is referred to, and at least one of the image processing section 109 and zoom varying mechanism 112 is controlled to set the initial angle of view of camera 111 at 120°. The control then goes to step 8q.

In this case, the initial angle of view of camera 111 is set at 120° by way of example. The angle of view set in this case is a suitable one when the TV phone function is used to image the user, as shown in FIG. 12.

In step 8q, the angle-of-view data table shown in FIG. 4 is referred to, and at least one of the image processing section 109 and zoom varying mechanism 112 is controlled to set the variable frame of the angle of view of camera 111 in a frame between 20° and 120°. The control then goes to step 8a.

Although a detailed explanation is omitted, the angle of view of camera 111 is variable in this variable frame according to the user's request through the operation section 108 in subsequent operations.

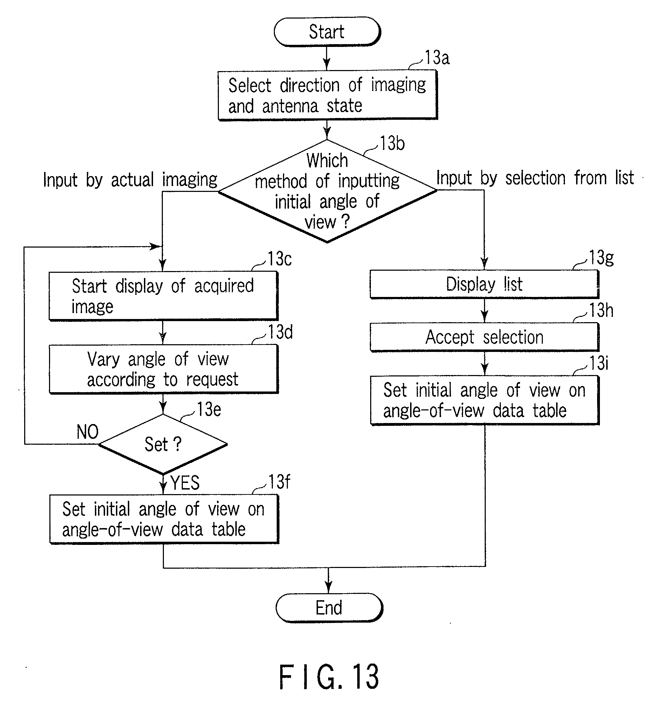

The operation of setting the initial angle of view on the angle-of-view data table shown in FIG. 4 will now be described. This setting operation, too, is controlled by the processor 100. When the user operates the operation section 108 to request execution of the imaging mode, the process illustrated in FIG. 13 begins.

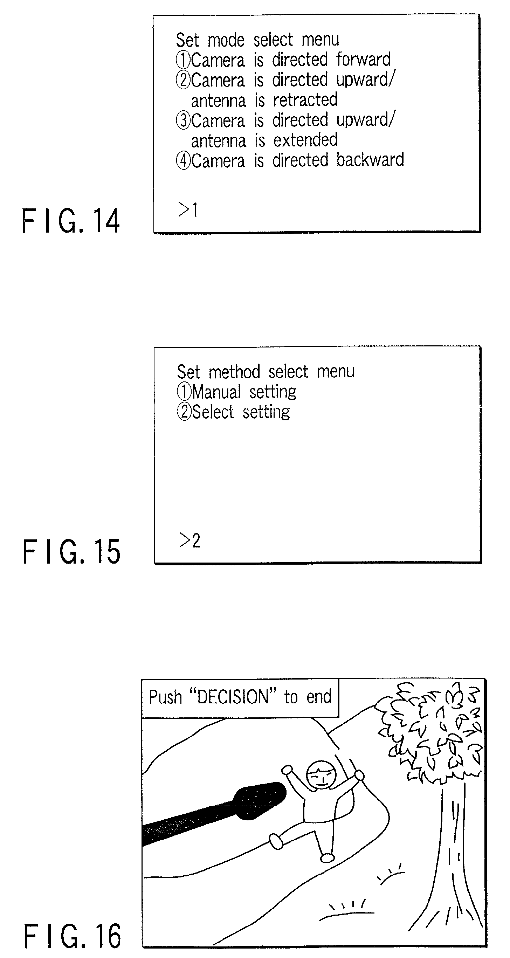

In step 13a, the display 110 is caused to display a guidance list (select menu) for selectively inputting the imaging direction of camera 111 and the state of antenna 101, as shown in FIG. 14.

The user is prompted to select the state associated with the desired initial angle of view from the displayed list through the operation section 108. The selected state is accepted and the control advances to step 13b.

In the example of display shown in FIG. 14, the user selects the state in which the camera 111 is directed forward.

In step 13b, the display 110 is caused to display a guidance list (select menu) as shown in FIG. 15. The user is prompted to select a method of inputting the initial angle of view through the operation section 108. In this example, the user selects one of a method of determining the initial angle of view by actually performing imaging by the camera 111 and a method of determining the initial angle of view from a list of preset default values.

In the example of display shown in FIG. 15, the user selects the setting associated with the case where the camera 111 is directed forward.

When the user has selected the method of determining the initial angle of view by actually performing imaging by the camera 111, the control goes to step 13c. On the other hand, when the user has selected the method of determining the initial angle of view from the list of preset default values, the control goes to step 13g.

In step 13c, the image processing section 109 is controlled to cause the display 110 to start a process of displaying the image acquired by the camera 111. The control then goes to step 13d.

In step 13d, in accordance with the user's request from the operation section 108, the image processing section 109 and zoom varying mechanism 112 are controlled to vary the imaging angle of view of camera 111. The control then goes to step 13e.

In step 13e, the image processing section 109 is controlled to cause the display 110 to display a message as shown in FIG. 16, thus asking whether the present angle of view should be set as the initial angle of view.

If the user has requested the setting within a predetermined time period through the operation section 108, the control advances to step 13f. If not, the control returns to step 13c.

In step 13f, the angle of view obtained by the image processing in the image processing section 109 or the optical angle of view of camera 111 told from the zoom varying mechanism 112 is recorded at a corresponding area in the angle-of-view data table shown in FIG. 4. Thus, the present process is finished.

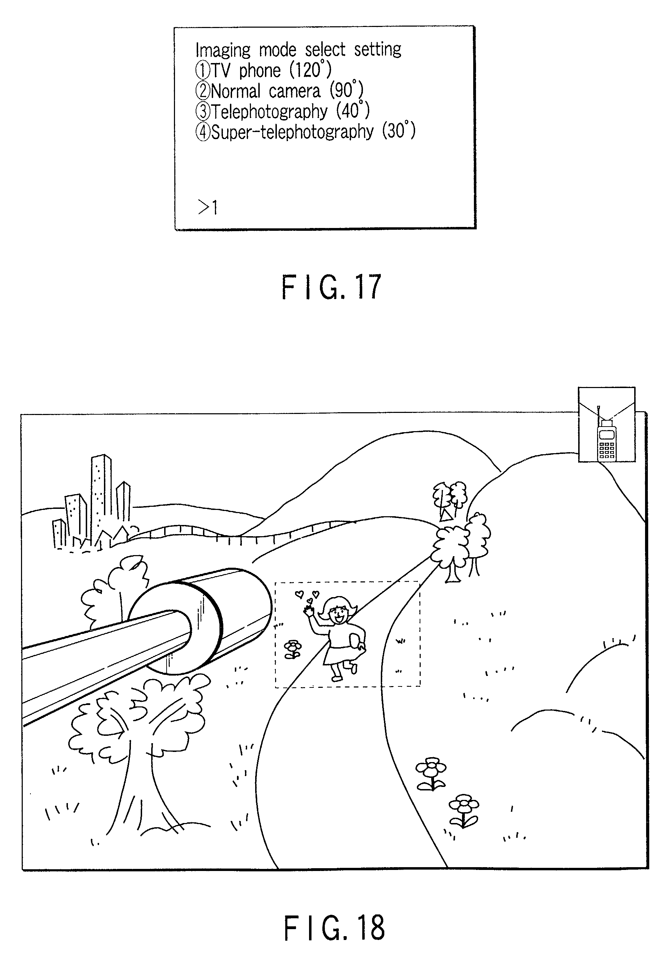

On the other hand, in step 13g, the image processing section 109 is controlled to cause the display 110 to display a setting list as shown in FIG. 17. This list prompts the user to set the initial angle of view. The control then goes to step 13h.

The list includes four default values of the angle of view, which correspond to the angle of view suitable for TV phone imaging, the angle of view suitable for normal camera imaging, the angle of view suitable for telephotographic imaging, and the angle of view suitable for narrow-angle telephotographic imaging.

In step 13h, the angle of view desired by the user is accepted through the operation section 108. The control then goes to step 13i. In the example of display shown in FIG. 17, the user selects the angle of view suitable for TV phone imaging.

In step 13i, the angle of image accepted in step 13h is recorded at a corresponding area on the angle-of-view data table of FIG. 4 as the initial angle of view. Thus, the present process is finished.

As has been described above, in the mobile radio terminal with the above structure, the initial angle of view and the variable frame of the angle of view of the camera 111 are set based on the angle-of-view data table (FIG. 4) stored in the memory 107 in accordance with the direction of the camera 111 and the state of the antenna 101.

For example, as shown in the angle-of-image data table recorded in the memory 107, when the imaging direction of camera 111 is upward and the antenna 101 is in the pulled out state, the initial angle of view can be set to be a narrow angle.

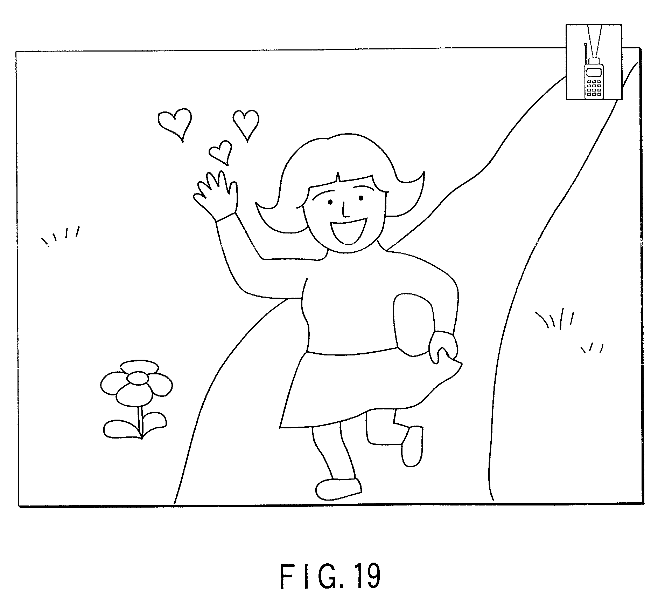

Even in the case of a mobile radio terminal with such a structure that a part of the antenna 101 may be imaged when the initial angle of view is wide, as shown in FIG. 18, the initial angle of view can be narrowed, as shown in FIG. 19. Thus, no part of the terminal becomes an obstacle to imaging.

In addition, the variable frame of the angle of view can be set so that the angle of view is prevented from falling in a frame at which a part of the terminal may become an obstacle to imaging.

Moreover, in the mobile radio terminal with the above structure, the initial angle of view can be set by the user's intention. Thus, such imaging can intentionally be performed that a part of the terminal becomes an obstacle to imaging.

The present invention is not limited to the above embodiment.

The above embodiment is directed to the case of taking a still image. Alternatively, the present invention can be applied to the case of taking a moving picture, as in TV phones, and the same advantages can be obtained.

The above embodiment is directed to the case of setting the initial angle of view. Alternatively, the variable frame of the angle of view can be set by the same process. In this case, however, the setting of the variable frame of the angle of view requires setting of the value of the angle of view on a wide-angle side and the value of the angle of view on a narrow-angle side. If the two values of these angles of view are equal, imaging with one angle of view is accepted.

In the above-described embodiment, in step 13a of FIG. 13, the user selects the state associated with the desired initial angle of view from the displayed list through the operation section 108. Alternatively, the user may vary, as desired, the imaging direction of the camera 111 and the state of the antenna 101. The varied states are detected by the imaging direction detection section 113, and the antenna state detection section 102. In accordance with the detected result, the initial angle of view and the variable frame of the angle of view may be set.

In the above-described embodiment, the angle of view is varied by the digital zoom function of the image processing in the image processing section 109, or by the zoom varying mechanism 112 that varies the optical zoom mechanism of the camera 111. However, only one of these methods may be used.

In the above embodiment, it is assumed that the camera 111 is mounted in the mobile radio terminal. Alternatively, this invention can be applied, where necessary, to a mobile radio terminal having an interface with the camera 111.

Needless to say, even if the camera 111 is of the type attachable to the mobile radio terminal, the same advantages can be obtained.

In the above embodiment, it is assumed that the mobile radio terminal performs communication via the mobile communication terminal. Alternatively, this mobile radio terminal may directly perform radio communication with some other radio communication apparatus.

Needless to say, variable modification can be made to the present invention without departing from the spirit of the invention.

## Claims

1. A mobile radio terminal with electronic camera (111) capable of varying a direction, comprising:
direction detection section (113) configured to detect the direction of the electronic camera (111);
antenna state detection section (102) configured to detect the extension/retraction state of an antenna; and
angle control section (100, 112) configured to vary the angle of the image section (111) in accordance with the direction detected by the direction detection section (113) and the state of the antenna detected by the antenna state detection section (102).

2. A mobile radio terminal according to claim 1, **characterized in that** said angle control section varies the angle of view of the electronic camera on the basis of a data table (107) associated with the direction of imaging and the state of the antenna, and includes data control section (100) configured to vary the angle of view set on the data table (107) in accordance with a request from a user.

3. A mobile radio terminal with electronic camera (111) capable of varying a direction of imaging and an angle of view for imaging, **characterized by** comprising:
direction detection section (113) configured to detect the direction of imaging of the electronic camera (111);
variable frame control section (100) configured to set a variable frame of the angle of view of the electronic camera (111) in accordance with the direction of imaging detected by the direction detection section (113); and
angle control section (100, 112) configured to vary the angle of view of the electronic camera (111) within the variable frame set by the variable frame control section (100).

4. A mobile radio terminal according to claim 3, **characterized by** further comprising antenna state detection section (102) configured to detect the extension/retraction state of an antenna for radio communication,
wherein said variable frame control section (100) sets the variable frame of the angle of view of the electronic camera (111) in accordance with the direction of imaging detected by the direction detection section (113) and the state of the antenna detected by the antenna state detection section (102).

5. A mobile radio terminal according to claim 3 or 4, **characterized in that** said variable frame control section (100) varies the variable frame of the angle of view of the electronic camera (111) on the basis of a data table (107) associated with the direction of imaging and the state of the antenna, and includes data control section (100) configured to varying the variable frame of the angle of view set on the data table (107) in accordance with a request from a user.
